# EUROPEAN PATENT SPECIFICATION

(11) **EP 1 138 209 B1**
(45) Date of publication and mention of the grant of the patent: **01.06.2005**
(21) Application number: 01201171.4
(22) Date of filing: 29.03.2001
(51) Int. Cl.: A23L 1/217, A23P 1/08

(54) **Method for providing a coating to deep-fry products**
Verfahren zur Beschichtung von Fritiergut
Méthode pour recouvrir des produits à frire

(30) Priority: 30.03.2000 NL 1014795
(43) Date of publication of application: 04.10.2001
(73) Proprietor: Aviko B.V., 7221 CD Steenderen (NL)
(72) Inventor: Keijbets, Martin Jozef Hubert, 6703 EH Wageningen (NL)
(74) Representative: Prins, Adrianus Willem, Mr. Ir.

(56) References cited:
- EP-A- 0 913 099
- WO-A-99/34691
- US-A- 3 656 969
- US-A- 4 511 583

## Description

The invention relates to a method for applying a coating to deep-fry products, such as fried potatoe chips, comprising the steps of: dipping said deep-fry products in a dipping solution, said dipping solution comprising at least one of the components of colouring agents, agents for preventing greying and flavouring substances; drying said dipped deep-fry products; the method further comprising the step of coating said deep-fry products by applying aqueous flour batter to said deep-fry product.

Non-coated deep-fry products relatively rapidly lose the crispness which makes them so popular, and instead become soft, tough and sticky. This is due to migration of moisture from the inside of the deep-fry product into the dry, crispy crust. Coated deep-fry products have a clearly better crispness after frying, which can be maintained longer.

What is meant by deep-fry products, firstly, are potato products, such as fried potato chips or other forms thereof, such as for instance potato slices. Further, what is also meant, are other deep-fry products which can be provided with a coating, such as deep-fry snacks and the like. In particular, the invention relates to pre-fried deep-fry products. In an industrial process, such products are pre-fried in a frying oven in hot fat or oil, and can be finish-fried at home or in a catering establishment to a consumable product. This finish-frying can be done by deep-frying, but, in some cases, it is also possible to finish-fry the products in a hot air oven or even in a microwave oven, depending on the nature and composition of the product and the coating.

In the following, the preparation of potato products will be described further. However, the invention also relates to the preparation of deep-fry products of which potatoes do not form a (substantial) ingredient.

The preparation of fried potato chips is substantially as follows: potatoes are peeled and divided into segments (slices or sticks or the like). After sorting, during which segments with a deviant colour or shape are removed, they are blanched. Subsequently, colouring agents (such as reducing sugars), agents for preventing greying (such as sodium pyrophosphate) and flavoring substances (salt) are added. After this so-called dipping-step, the segments are dried, before the aqueous flour batter is applied to the deep-fry products (in practice, this is called "batter"). This application can be done in several manners. The batter can be sprayed in an aqueous form onto the segments, or the batter is contained in a bath, through which the segments can be passed. The batter is an aqueous flour batter, of for instance rice flour or wheat flour, and usually further contains starch, dextrin, leavening agents and salt. The batter forms a very crispy crust around the potato. Because of this coating, the chips cool less rapidly. The holding after finish-frying (during which the chips are often kept warm under a heat lamp) can thereby be considerably improved, so that chips, instead of about 3 - 5 minutes, can stay crispy for as long as 10 - 20 minutes.

For compositions of batter, reference is made to patent specifications EP-A-0,499,684, WO-A-097,42827 and EP-A-0,898,902. The processes described therein all have in common that the segments are dried before the batter is applied. This is considered necessary for a good adhesion of the batter to the segment. The drying of the blanched segments generally takes place by transporting them via a belt dryer to a batter bath, i.e. a place where the batter is applied.

A drawback of the current processing of batter is that, because of its adhesive action, it not only sticks to the surface of the potato segment, but also makes the segments cake together, so that, in processing, problems are experienced with caked-together segments, which, during the pre-frying, are fried together into one mass. Such a mass leads to loss in production and quality.

Solutions to this problem have been sought in different directions. For instance, agents are added to the batter for reducing the effect of agglomeration. Many of the publications mentioned appear to claim that the newly developed batter does not have this effect of caking together, or, at least, to a reduced extent. In practice, however, it appears that it is still necessary to take additional measures to prevent caking together of the segments. Such measures are, in particular, installing a conveyor belt on which the segments are brought in a single layer (a so-called singling belt), where, by means of air, excess batter is blown off the segments (also called an air knife). The blown-off batter can be re-used by applying a recovering system. Additionally, a second deep-fry oven appears necessary and a so-called vibrator, which is positioned after a first frying oven where the chips are briefly fried (10 - 15 seconds), in order to harden the batter. Since the segments are only briefly fried, the vibrator can separate the caked together parts, so that, in the second frying oven, the segments can individually be further fried to a desired degree.

It is self-evident that such measures are disadvantageous to the efficiency of the process. Moreover, installing such a vibrator and second frying oven in an existing production line involves very high costs. Additionally, this extra step entails a loss of capacity. Investments, loss of capacity, additional work and the cost of the batter itself thus lead to a considerable increase of the cost price.

The object of the invention is to avoid the above-mentioned drawback and to provide a method, wherein, in a considerably less expensive and more efficient manner, a layer of batter can be applied to the segments, without the problem of agglomeration occurring.

This object is achieved with a method of the type mentioned above, further comprising the steps of adding said aqueous flour batter as a suspension to said dipping solution in a quantity that is sufficient to form a separate crispy layer around said deep fry product; and coating the deep-fry products with the added aqueous flour batter while dipping the products in the dipping solution.

This dipping step is described in EP-A-0.913.099 as a so-called pretreatment step, wherein respectively a dextrose dip, and a sodium acid pyrophosphate treatment are described. From EP-A-0.913.099 it becomes clear, that first, the French fries are dipped, and then, the Fries are ready for being coated. This coating is thus performed by an additional coating step, by immersing the fries in a coating mixture. According to EP-A-0.913.099, the product may be dried and/or treated with a pyrophosphate (that is: dipped) prior to the coating step.

US-A-3.656.969 discusses a method of applying a breaded coating on a skewed vegetable. The coating is applied by subsequently dipping the product in a fine breading material (liquid batter) and in a coarse breading material. US-A-3.656.969 shows that a coating step can be performed in two mutually distinct fine breading stages and coarse breading stages. The liquid batter disclosed in US-A-3.656.969 is very different from an aqueous flour batter added as a suspension to a conventional dipping solution, which is very watery.

US 4.511.583 discloses a method of preparing battered and breaded comestibles. The products are provided with a film forming agent in order to be less susceptible to oil absorption. This film forming agent is an aqueous starch or gelatine solution, that is brought in contact with a product that is first coated with a batter in a batter coating step. The aqueous solution is applied to the product by spraying the product, not by dipping.

When applying the method according to the invention, it appears that, despite the fact that the batter can adhere to a much lesser extent to the potato segment, this adhesion is sufficient to form a coating which is advantageous to the taste and the crispness of the deep-fry product, and whose holding is still considerably better than when no coating has been applied. In an experiment, 100% of the deep-fried chips stood a so-called "break test". In fast food restaurants, this test is a standard for the crispness: after a certain amount of time, sticks of chips should still break for a large part, for instance after having been kept under a heat lamp for 10 minutes. Surprisingly, it appears that the adhesive action between the individual segments is largely lost. By applying the method according to the invention, therefore, expensive additional measures such as the extra batter bath, the air knife, the singling belt, the vibrator and the second deep-fry oven, are not necessary. It is sufficient to add the batter in an existing production process, in the step before the drying.

Incidentally, it is noted, that from the US patents 5,302,410 and 5,393,552 it is known per se, in the dipping step, to add additives which comprise a hydrolysed starch such as a (malto)dextrin. However, this method cannot be compared to what is meant here, which is, adding a batter. Although this batter also contains dextrin, it comprises in particular flour products, so that the batter forms a separate, crispy layer on the surface of the potato. In the above-mentioned US-publications dextrin is rather used to achieve, in combination with a specific acidity, a sloughing effect, so that the structure of the potato surface itself is changed without a separate crispy layer being formed therearound. Such a specific acidity is of no importance with a batter. The above-mentioned US-publications therefore do not offer a solution which is right away applicable to the above described problem of the use of the batter known in current practise.

Applying a coating to the deep-fry products is, according to the invention, carried out during the dipping step mentioned earlier. In the industry, this dipping step can for instance take place in a screw blancher, a dipping bath or a so-called flume. The latter is a tube, through which the blanched segments are transported with water. The segments are contacted with a dipping solution, which solution can comprise colorants, agents for preventing greying, and flavorings. In the dipping solution, the batter is added as suspension.

Accordingly it is achieved, that with very few adaptations, applying batter can be utilized successfully in a conventional production line, in which, normally, deep-fry products are not provided with a layer of batter. By simply adding the batter to the customary dipping solution, a suspension is formed, from which the deep-fry products still absorb a layer of batter (albeit a relatively small one). Then, the deep-fry products are dried in the customary steps and supplied to a deep-fry oven, after which they are prepared for shipment by cooling and freezing them.

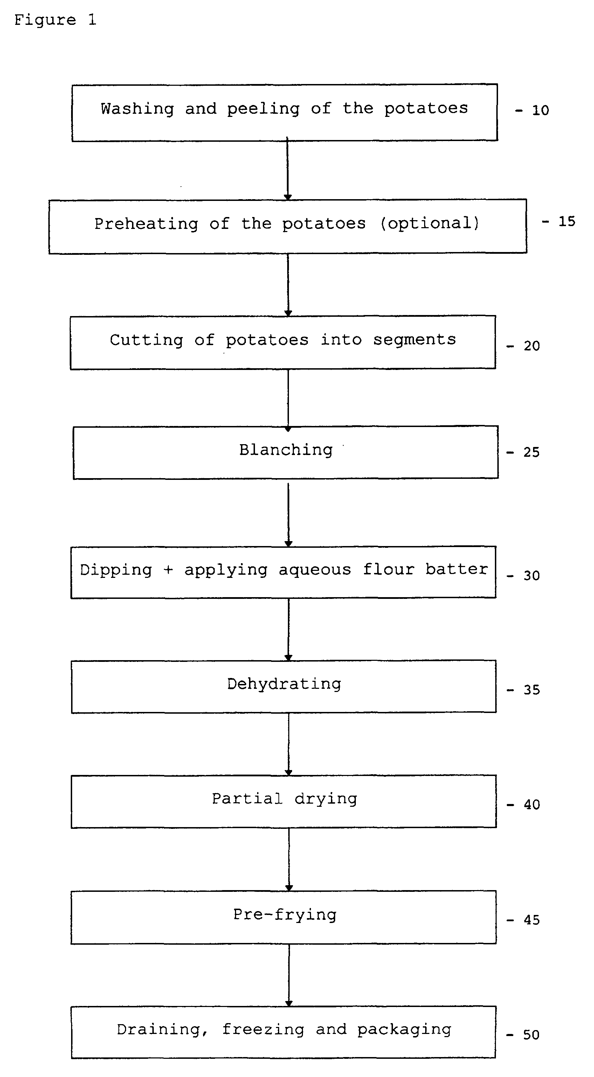

The invention will be elucidated on the basis of the drawing, in which
Fig. 1 schematically shows a method in which the invention is applied.

With reference to Fig. 1, an example will be described, in which a coating is applied to fried potato chips utilizing the invention. Therein, steps 10, 15, 20 and 25 are the customary steps, such as described for instance in the patent publication mentioned in the preamble, and will therefore be described only briefly.

First, the potatoes are washed and peeled (10). The peeling can, if so desired, be omitted. To facilitate the cutting (20), the potatoes can be preheated. The cutting is most often done with a water knife, i.e. a tubular body, through which the potatoes are fed in a flow of water, through a knife shaped element, disposed in the tubular body. The sticks formed accordingly are blanched (25), i.e. slightly boiled in steam or hot water.

After blanching, the sticks are transported, in step 30, by means of a transporting tube (a so-called flume) to a dehydrating apparatus. The transport medium by means of which the segments are transported, is an aqueous solution, a so-called dipping solution. The dipping solution mostly contains a reducing sugar. Such a substance can give the potato a desired degree of browning. Additionally, the dipping solution often contains agents which keep metal ions in solution, so that greying of the potato is avoided. An agent having such an effect is, for instance, acid sodium pyrophosphate (a chelating agent). Further, the solution can contain flavorings, in particular salt (sodium chloride).

To the dipping solution according to the invention, flour batter in a suspension has been added. Compositions of the flour batter are for instance known from patent specifications EP 0,499,684, PCT 97,42827 and EP 0 898,902 and nowadays are generally applied in the industry. Apart from flour, the batter usually comprises dextrin, starch, leavening agents and salt, and can contain further additions, such as for instance thickening agents, celluloses and proteins. Various sorts of starch can be used. For instance, apart from potato starch, maize starch and tapioca starch can be applied. A possible ratio of dry matter - water is 10:90 percent by weight, but the solution can, if so desired, also be more or less aqueous.

The sticks provided with a coating in this manner leave the flume and, during a short period of time, drain on a dehydration apparatus to lose the greater part of water (35). Subsequently, the sticks are led through a belt dryer, where, during the residence time, the segments with the coating can somewhat dry in (40). The thus dried sticks are subsequently pre-fried (45) in a deep-fry oven, for a short period of time, after which the pre-fried sticks are drained, are frozen and packaged (50).

With the method described hereinabove, it is clear that no use needs to be made of a separate batter bath, the above-mentioned air knife, a singling belt, a vibrator and a second deep-fry oven.

The invention is not limited to applying a coating only meant to increase crispness and holding time. Such coatings are also called clear-coatings because they have to be as little visible as possible. The invention can also be applied with batter to which spices, colorants, fragrances and flavorings have been added, with the aim to produce spicy pre-fried deep-fry products. These coatings, also known as "spicy coatings" or "savoury coatings" are clearly visible, inter alia due to the colour of the spices and/or by added (natural) colorants.

## Claims

1. A method for applying a coating to deep-fry products, such as fried potatoe chips, comprising the steps of:
- dipping said deep-fry products in a dipping solution, said dipping solution comprising at least one of the components of colouring agents, agents for preventing greying and flavouring substances;
- drying said dipped deep-fry products;
the method further comprising the step of
- coating said deep-fry product by applying aqueous flour batter to said deep-fry product;
the method **characterized by**
- adding said aqueous flour batter as a suspension to said dipping solution so that the batter forms a separate crispy layer on the surface of the potato; and
- coating the deep-fry products with the added aqueous flour batter while dipping the products in the dipping solution, without using a separate batter bath.

## Patentansprüche

1. Verfahren zum Aufbringen einer Beschichtung auf Frittierprodukte wie z.B. Pommes frites, umfassend die Schritte:
- Eintauchen der Frittierprodukte in eine Tauchlösung, wobei die Tauchlösung wenigstens einen der Bestandteile Färbemittel, Mittel zum Verhindern der Vergrauung und würzende Substanzen enthält;
- Trocknen der getauchten Frittierprodukte;
wobei das Verfahren des Weiteren den Schritt umfasst:
- Beschichten des Frittierprodukts durch Aufbringen eines wässrigen Mehlteigs auf das Frittierprodukt;
wobei das Verfahren **gekennzeichnet ist durch**
- Zugeben des wässrigen Mehlteigs als Suspension zur Tauchlösung, so dass der Teig eine separate knusprige Schicht auf der Oberfläche der Kartoffel bildet; und
- Beschichten der Frittierprodukte mit dem zugesetzten wässrigen Mehlteig während des Eintauchens der Produkte in die Tauchlösung ohne Verwendung eines separaten Mehlbads.

## Revendications

1. Procédé pour recouvrir des produits de friture, tels que des pommes de terre frites, comportant les étapes consistant à :
- tremper lesdits produits de friture dans une solution de trempage, ladite solution de trempage comportant au moins un des composants parmi des agents colorants, des agents pour empêcher de ternir et des aromatisants,
- sécher lesdits produits de friture trempés,
le procédé supplémentaire comportant l'étape consistant à
- recouvrir ledit produit de friture en appliquant de la pâte à frire de farine et d'eau audit produit de friture
le procédé étant **caractérisé en ce qu'**il comporte les étapes consistant à
- ajouter ladite pâte à frire de farine et d'eau sous la forme d'une suspension à ladite solution de trempage, pour que la pâte à frire forme une couche croustillante séparée sur la surface de la pomme de terre, et
- recouvrir les produits de friture avec la pâte à frire de farine et d'eau ajoutée en trempant les produits dans la solution de trempage, sans utiliser un bain de pâte à frire séparé.
